# FASCICULE DE BREVET EUROPEEN

(11) **EP 3 277 474 B1**
(45) Date de publication et mention de la délivrance du brevet: **15.07.2020**
(21) Numéro de dépôt: 16719017.2
(22) Date de dépôt: 01.04.2016
(51) Int. Cl.: B29C 44/06, B29C 44/08, B29C 49/04, B29C 49/22, B32B 1/02, B60K 15/077, B29C 45/16, B29D 22/00, B32B 5/18, B60K 15/03

(54) **PROCEDE DE FABRICATION D'UN RESERVOIR EN MATIERE PLASTIQUE AVEC DISPOSITIF ANTI-BALLOTTEMENT**
VERFAHREN ZUR HERSTELLUNG EINES KUNSTSTOFFTANKS MIT EINER ÜBERSCHWAPPSCHUTZVORRICHTUNG
METHOD FOR THE PRODUCTION OF A PLASTIC TANK COMPRISING AN ANTI-SLOSH DEVICE

(30) Priorité: 03.04.2015 FR 1552916; 06.11.2015 FR 1560675
(43) Date de publication de la demande: 07.02.2018
(73) Titulaire: Plastic Omnium Advanced Innovation and Research, 1130 Bruxelles (BE)
(72) Inventeur: DHAUSSY, Franck, 60280 Margny-les-Compiegne (FR); LEMASSON, Wilfried, 60490 Marest Sur Matz (FR); GUIGNERY, Frédéric, 95540 Mery-sur-Oise (FR)
(74) Mandataire: de la Bigne, Guillaume Michel Marie
(86) Numéro de dépôt international: PCT/EP2016/057288
(87) Numéro de publication internationale: WO 2016/156608

(56) Documents cités:
- EP-A1- 2 322 337
- EP-A1- 2 322 337
- WO-A1-2015/046307
- DE-A1-102011 113 845
- FR-A1- 2 216 079
- US-A1- 2009 121 375
- US-A1- 2009 121 375
- US-A1- 2010 187 710
- US-A1- 2010 187 710
- US-A1- 2015 061 192

## Description

La présente invention concerne un procédé de fabrication d'un réservoir en matière plastique. Plus précisément, l'invention concerne la fabrication d'un réservoir équipé d'un dispositif anti-ballottement. L'invention s'applique notamment à la fabrication de réservoirs pour le stockage d'un liquide pour véhicules mobiles, tel que par exemple du carburant ou de l'urée.

Dans le cas d'un réservoir de véhicule, les manœuvres de freinage et redémarrage successives du véhicule provoquent des translations de la masse de liquide dans le réservoir qui sont perçues par le conducteur sous la forme de bruits avec effet de choc (aussi appelé slosh noise). En outre, ces transferts de masse peuvent avoir un impact sur le comportement routier du véhicule.

Pour pallier ces inconvénients, il a été proposé des réservoirs équipés de dispositifs anti-ballottement (ou dispositifs antiroulis) (ou baffle, en anglais) comprenant des cloisons rigides ou semi rigide.

On connaît plusieurs techniques pour la fabrication de tels réservoirs.

Une première technique connue consiste à fixer un dispositif anti-ballottement dans un réservoir après le moulage du réservoir. Cette première technique connue est par exemple décrite dans le document WO 2010/029103.

Une deuxième technique connue consiste à fixer un dispositif anti-ballottement dans un réservoir pendant le moulage du réservoir. Cette deuxième technique connue est par exemple décrite dans le document WO 2008/138869.

Ces opérations de fixation sont délicates et consommatrices de temps. Par ailleurs, les vibrations induites par le choc du liquide sur ces dispositifs anti-ballottement rigides ou semi rigide peuvent générer du bruit solidien dans le réservoir. Le document WO 2015/046307 A1 divulgue un procédé de fabrication d'un réservoir équipé d'un dispositif anti-ballottement suivant le préambule de la revendication 1.

Un des buts de l'invention est donc de proposer une alternative aux techniques actuelles de fabrication de réservoirs équipés de dispositifs anti-ballottement.

Par réservoir, on entend désigner une enceinte étanche destinée au stockage de carburant, d'un additif pour carburant (tels que ceux requis pour diminuer la température de combustion des particules retenues sur les filtres à particules des moteurs diesels par exemple), pour gaz d'échappement (tels que l'urée ou autres précurseurs d'ammoniac dans les systèmes SCR) ou de tout autre fluide embarqué sur un véhicule (voiture, camion...).

Dès lors, il est proposé un procédé pour la fabrication d'au moins une paroi d'un réservoir comprenant au moins une première couche de matière thermoplastique et une deuxième couche à base de mousse, ladite deuxième couche à base de mousse formant au moins une partie d'un dispositif anti-ballottement, où la première couche et la deuxième couche sont moulées dans un seul et même moule.

Ainsi, le réservoir fabriqué peut être muni d'un dispositif anti-ballottement à base de mousse (avec cellules ouvertes ou fermées) en thermodurcissable ou thermoplastique. Un tel dispositif anti-ballottement est obtenu (i.e. formé) lors du soufflage ou de l'injection de la préforme. On peut donc fabriquer un réservoir muni d'un dispositif anti-ballottement au moyen d'une opération de soufflage ou d'injection.

Cela procure donc l'avantage d'économiser des moyens et de la main d'oeuvre, et augmente significativement l'efficacité du dispositif anti-ballottement.

Dans un premier mode de réalisation particulier de l'invention, il est proposé un procédé pour la fabrication par extrusion-soufflage d'un réservoir muni d'un dispositif anti-ballottement suivant l'objet de la revendication 1.

Le procédé selon le premier mode de réalisation particulier de l'invention comprend les étapes suivantes:
- on insère une préforme en matière thermoplastique comprenant au moins la première couche et la deuxième couche dans ledit seul et même moule ouvert;
- on ferme ledit seul et même moule; et
une fois que ledit seul et même moule est fermé, on souffle la préforme à l'aide d'un fluide sous pression pour la plaquer contre ledit seul et même moule.

Par préforme, on entend une paraison tubulaire ou un ensemble de deux feuilles de matériau thermoplastique. La paraison tubulaire ou l'ensemble de deux feuilles peuvent eux-mêmes être constitués de plusieurs couches de matériaux différents (obtenus par exemple par coextrusion).

Avantageusement, pour obtenir la préforme en matière thermoplastique comprenant au moins la première couche et la deuxième couche, on extrude simultanément la première couche et la deuxième couche.

Selon l'invention, la deuxième couche est une couche formée d'un mélange d'un polymère thermoplastique et d'un agent moussant chimique. Cette deuxième couche, ou couche de mélange, forme après soufflage le dispositif anti-ballottement.

On désigne par le terme "polymère" aussi bien les homopolymères que les copolymères (binaires ou ternaires notamment). Des exemples de tels copolymères sont, de manière non limitative : les copolymères à distribution aléatoire, les copolymères séquencés, les copolymères à blocs et les copolymères greffés. En particulier, on peut utiliser des polyoléfines, des polyesters thermoplastiques, des polycétones, des polyamides et leurs copolymères PU. Un mélange de polymères ou de copolymères peut aussi être utilisé, de même qu'un mélange de matières polymériques avec des charges inorganiques, organiques et/ou naturelles comme, par exemple, mais non limitativement : le carbone, les sels et autres dérivés inorganiques, les fibres naturelles ou polymériques. D'excellents résultats peuvent être obtenus avec du polyéthylène haute densité (PEHD) ou du polyamide-6,6.

Dans un mode de réalisation particulier, la préforme comprend une couche intérieure (i.e. ladite deuxième couche) comprenant ladite couche de mélange, une ou plusieurs couche(s) comprenant au moins un adhésif, et une couche extérieure (i.e. ladite première couche) à base de polymère thermoplastique.

Dans un autre mode de réalisation particulier, la préforme comprend une couche intérieure comprenant ladite couche de mélange et une couche extérieure à base de polymère thermoplastique. Dans ce cas particulier, aucune couche d'adhésif n'est utilisée.

Selon l'invention, une fois que ledit seul et même moule est fermé, on injecte dans le moule fermé un gaz contenant un agent réactif, par exemple à base d'azote ou de dioxyde de carbone (CO₂), afin d'amorcer une réaction de moussage de l'agent moussant de la deuxième couche. Comme dans un procédé d'extrusion par soufflage conventionnel, le gaz sous pression viendra plaquer la paraison sur les parois du moule.

Selon l'invention, cette introduction de l'agent réactif dans le moule est effectuée en introduisant le gaz comprenant l'agent réactif pendant la phase de soufflage. La réaction de moussage est alors enclenchée lors de la phase de soufflage du réservoir, une fois le moule du réservoir refermé sur la paraison.

Dans le cas de paraisons réalisées à partir de deux feuilles, technique connue et par exemple décrite dans le document EP 1 110 697, il est possible de contrôler l'expansion de la mousse en utilisant des contres-formes montées sur un noyau du moule de soufflage. On entend ici par contre-formes des parties du moule mobile ou non mobiles permettant de contrôler mécaniquement l'expansion de la mousse en la bloquant si nécessaire.

Avantageusement, la préforme comprend en outre une couche intermédiaire comprenant au moins un adhésif.

Avantageusement, la préforme comprend en outre une couche barrière vis-à-vis des hydrocarbures et/ou une couche comprenant de la matière plastique recyclée, située(s) entre la couche intérieure (i.e. ladite deuxième couche) et la couche extérieure (i.e. ladite première couche).

Ainsi, le procédé de l'invention convient bien à la fabrication de réservoirs en plastique multicouche.

Par couche barrière, on entend désigner une couche imperméable aux liquides et aux gaz. La couche barrière comprend généralement une résine barrière. Toute résine barrière connue peut être utilisée, pour autant qu'elle soit efficace vis-à-vis des fluides en contact avec le réservoir, en particulier des hydrocarbures, et qu'elle soit compatible avec la technique de moulage qui est utilisée pour mettre en forme ce réservoir. Parmi les résines utilisables, on peut citer, de manière non limitative, les polyamides ou copolyamides ou les copolymères statistiques d'éthylène et d'alcool vinylique. Un mélange de différentes résines barrières peut aussi être utilisé. De très bons résultats ont été obtenus avec une résine barrière de copolymère statistique d'éthylène et d'alcool vinylique.

Par matière plastique recyclée, on entend une matière plastique obtenue par broyage de chutes obtenues à différentes étapes de la fabrication d'un réservoir, en particulier le réservoir multicouche selon l'invention, ou par broyage de réservoirs usagés en fin de vie.

L'agent moussant chimique pouvant être utilisé est de préférence de l'azodicarbonamide, un mélange isobutane/n-butane, un chlorofluorocarbure ou tout autre agent moussant présentant les mêmes propriétés.

Dans un deuxième mode de réalisation n'appartenant pas à l'invention, il est proposé un procédé pour la fabrication par injection d'un réservoir muni d'un dispositif anti-ballottement.

Le procédé selon le deuxième mode de réalisation comprend les étapes suivantes :
- on place ledit seul et même moule dans une première position de fermeture de manière à former une première cavité d'injection ;
- on injecte ladite première couche ;
- on place ledit seul et même moule dans une deuxième position de fermeture de manière à former une deuxième cavité d'injection ;
- on injecte ladite deuxième couche.

Ainsi, avec ce deuxième mode de réalisation, il est possible de contrôler les dimensions de la deuxième couche, et donc du dispositif anti-ballottement. Plus précisément, les dimensions de la deuxième couche peuvent être contrôlées en ajustant l'ouverture de la deuxième cavité d'injection. Ainsi avec un seul et même moule, il est possible de fabriquer des réservoirs comprenant des dispositifs anti-ballotements de tailles et de formes différentes.

De préférence, on injecte dans ledit seul et même moule fermé un gaz, par exemple de l'azote, afin de déclencher une réaction d'expansion de la mousse. Ceci permet également d'optimiser la taille des porosités de la mousse.

Avantageusement, ladite première couche injectée comprend au moins une cavité d'accrochage dans laquelle ladite deuxième couche peut pénétrer lors de son injection dans la deuxième cavité d'injection.

Avantageusement, ledit seul et même moule comprend plusieurs points d'injection de ladite deuxième couche.

Avantageusement, ladite deuxième couche est une couche de mousse polyuréthane.

Avantageusement, ladite deuxième couche est une couche de mousse polymère.
Les figures la à 1c ont pour but d'illustrer, à titre d'exemple indicatif et non limitatif, le principe d'un procédé de fabrication par extrusion-soufflage selon le premier mode de réalisation particulier de l'invention.

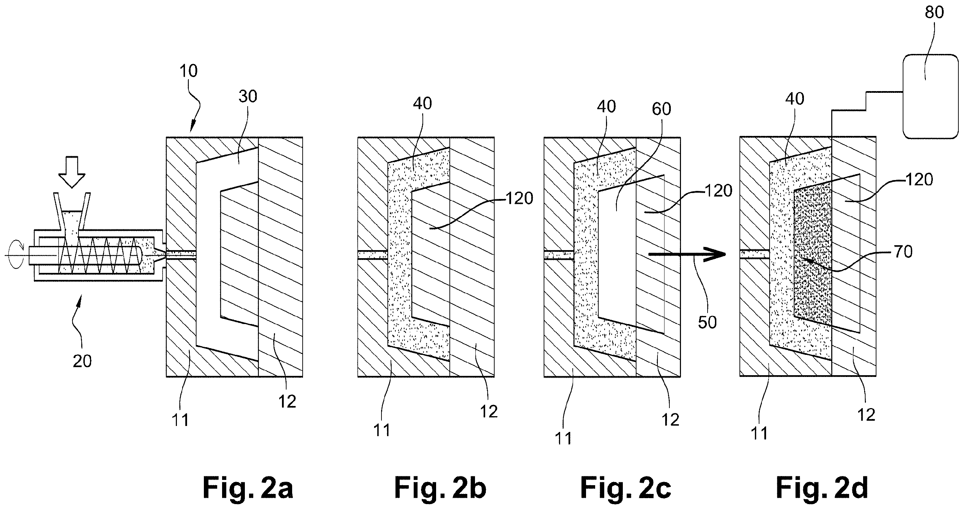

Les figures 2a à 2d ont pour but d'illustrer, à titre d'exemple indicatif et non limitatif, le principe d'un procédé de fabrication par injection selon le deuxième mode de réalisation n'appartenant pas à l'invention.

Selon un premier mode de réalisation de l'invention, et comme illustré à la figure la, une paraison (1) en matière plastique est introduite entre deux empreintes d'un moule (2) en position d'ouverture. La paraison (1) est introduite dans le moule (2), tout en étant maintenue ouverte/écartée. Le moule (2) comprend des empreintes (3, 4). Les empreintes du moule (3, 4) présentent une surface interne (3', 4') correspondant à la surface externe du réservoir à mouler.

Dans cet exemple de réalisation, la paraison (1) comprend une structure multicouche. Elle comprend ainsi une couche intérieure, elle-même composée d'une première couche de d'un PEHD (polyéthylène à haute densité), et d'une deuxième couche d'un agent moussant chimique, une couche intermédiaire comprenant un adhésif, et une couche extérieure à base de PEHD. On notera que la couche intermédiaire d'adhésif est optionnelle.

La couche intérieure de la paraison se trouve dans un état visqueux aux températures de formage de la paraison (1), et sa viscosité, au moment de son introduction dans le moule, s'apparente à celle du polyéthylène haute densité utilisée dans un processus classique de formage de réservoir.

Par ailleurs, au moment de son introduction dans le moule (2), c'est-à-dire avant l'opération de soufflage, la deuxième couche d'agent moussant, réactive mais non encore moussée, est solidaire de la première couche de PEHD. A cet effet, la couche d'agent moussant a de préférence été produite simultanément avec celle-ci par extrusion.

Un agent réactif qui permet d'enclencher une réaction de moussage (ou activation de l'agent moussant) est, dans le premier mode de réalisation illustré dans les figures la à 1c, introduit lors de la phase de soufflage du réservoir, une fois le moule du réservoir refermé sur la paraison (1). De préférence, cette introduction de l'agent réactif dans le moule (2) est effectuée en introduisant un gaz spécifique, comprenant l'agent réactif, pendant la phase de soufflage.

Avantageusement, la concentration en agent moussant, ainsi que l'épaisseur de la couche intérieure doivent permettre de réaliser, après la réaction de moussage, une couche constituée principalement de cellules ouvertes. L'épaisseur de cette dite couche à l'état final est avantageusement comprise entre 5mm et 200 mm.

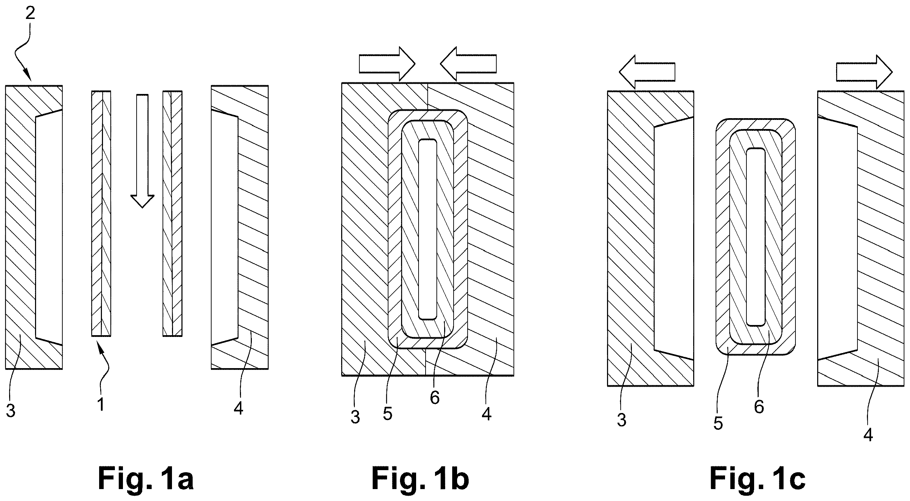

La figure 1b illustre l'étape de soufflage de la paraison. Pendant cette étape le moule est complètement fermé. On peut voir que les empreintes du moule sont accolées par leur pourtour. Pendant cette étape de soufflage, on va former la paroi extérieure (5) du réservoir ainsi qu'un dispositif anti-ballottement interne (6) à base de mousse.

En effet, au cours de l'étape de soufflage, on introduit le gaz contenant l'agent réactif permettant le déclenchement de la réaction de moussage dans le moule (2), de manière à remplacer totalement ou en partie l'air ou le diazote utilisés habituellement dans le procédé de soufflage. On contrôle l'expansion de la mousse en faisant varier la température, la pression, la concentration d'agent réactif dans le gaz de soufflage, et les temps d'exposition de la couche intérieure du réservoir par l'agent réactif. De préférence, le gaz comprenant l'agent réactif est de l'azote et l'agent réactif est à base d'azote ou de dioxyde de carbone (CO₂).

Dans le cas d'un réservoir réalisé à partir d'une paraison, le plan de joint du réservoir n'est exposé à l'agent réactif que pendant la phase de pré-gonflage. Cette phase de pré-gonflage peut être réalisée à l'aide d'un gaz de soufflage ne contenant pas d'agent réactif, l'agent réactif étant introduit après la fin de la phase de pré-gonflage.

Dans le cadre d'un réservoir réalisé à partir de deux feuilles, le plan de joint n'est pas exposé à l'agent réactif.

Par ailleurs, toujours dans le cadre d'un réservoir réalisé à partir de deux feuilles, l'expansion de la mousse peut être contrainte de façon mécanique par des éléments supportés par le noyau du moule (2), tels que des contre-formes montées sur un noyau du moule de soufflage. Ces contre-formes sont des parties du moule (2) mobiles ou non mobiles permettant de contrôler mécaniquement l'expansion de la mousse en la bloquant si nécessaire.

On notera que la phase d'activation de l'agent moussant n'impacte que très peu le temps de soufflage des réservoirs conventionnels. Néanmoins, il peut être nécessaire de purger le gaz contenant l'agent réactif avant de terminer le processus de soufflage.

Lorsque l'ensemble est refroidi, on ouvre le moule (i.e. on écarte les empreintes l'une de l'autre) et le réservoir peut être démoulé. Ceci est illustré à la figure 1c. On obtient ainsi un de réservoir ayant, dans ses zones de ballotement, un revêtement en mousse à cellules ouvertes, dont la présence permet de limiter le bruit solidien ou à effet de choc (slosh noise) dans le réservoir. Le réservoir ainsi fabriqué comprend donc avantageusement un dispositif anti-ballottement fixé sur son pourtour intérieur.

Selon un deuxième mode de réalisation n'appartenant pas à l'invention, le réservoir est fabriqué par injection.

A la figure 2a, on peut voir un moule (10) dans une première position de fermeture. Le moule est relié à une vis d'injection (20). Dans cette première position de fermeture, une première cavité d'injection (30) est formée entre les empreintes (11, 12) du moule.

Puis, comme on peut le voir à la figure 2b, la vis d'injection (20) injecte un polymère thermoplastique dans la première cavité d'injection, de manière à mouler un premier élément de paroi (i.e. ladite première couche injectée) (40).

Avantageusement, l'empreinte (12) du moule comprend une pièce mobile (120) configurée pour se déplacer de manière relative par rapport à l'empreinte (12).

A la figure 2c, on peut voir le moule (10) dans une deuxième position de fermeture. Comme illustré, le moule passe de la première position de fermeture à la deuxième position de fermeture en déplaçant la pièce mobile (120) suivant une direction indiquée par la flèche (50). Dans cette deuxième position de fermeture, une deuxième cavité d'injection (60) est formée entre les empreintes du moule.

Comme illustré à la figure 2d, le moule (10) est relié à une buse d'injection (80) configurée pour injecter une mousse polymère dans la deuxième cavité d'injection (60). La mousse polymère peut être, par exemple et de manière non limitative, une mousse polyuréthane.

Cette mousse polyuréthane est de préférence issue d'un mélange de plusieurs composants liquides. Ces composants sont par exemple mélangés sous des conditions de température et de pression choisies afin de former un liquide injectable grâce à une machine de mélange à haute pression, connue en soi, dont fait partie la buse d'injection (80).

De préférence, un gaz, tel que de l'azote, est ajouté au mélange pour enclencher une réaction d'expansion de la mousse. Ainsi, on injecte de préférence une mousse liquide additionnée d'un tel gaz directement dans la deuxième cavité d'injection (60). Ceci permet également d'optimiser la taille des porosités de la mousse. On notera que la réaction d'expansion est due tant au mélange des produits qu'aux conditions d'injection du mélange et du gaz.

Par ce biais, on moule un deuxième élément de paroi (i.e. la deuxième couche injectée) (70) sur le premier élément de paroi (40).

Avantageusement, le deuxième élément de paroi (70) peut former tout ou partie d'un dispositif anti-ballottement interne au réservoir.

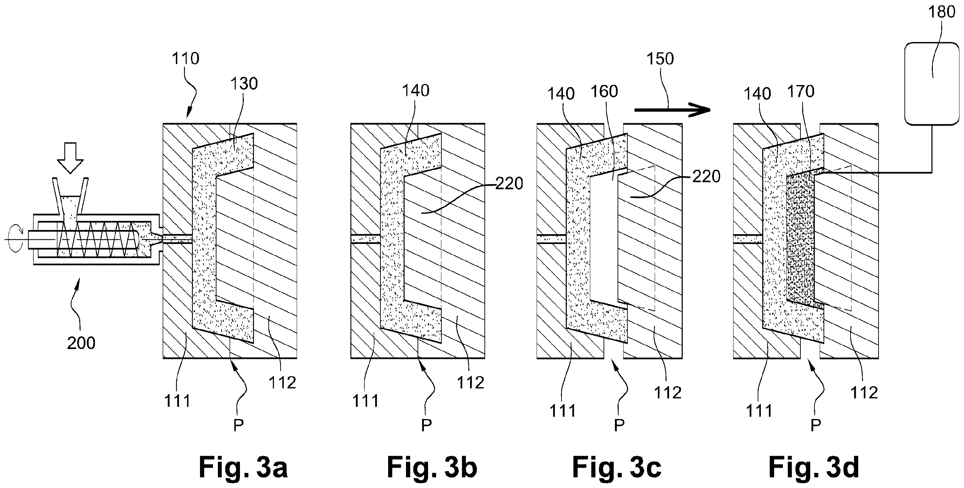

Les figures 3a à 3d ont pour but d'illustrer, à titre d'exemple indicatif et non limitatif, le principe d'un second procédé de fabrication par injection selon le deuxième mode de réalisation.

Les figures 3a et 3b représentent des étapes similaires à celle illustrées aux figures 2a et 2b, dans lesquelles on peut voir un moule (110) dans une première position de fermeture, le plan de joint P joignant les empreintes (111, 112) du moule du moule étant fermé.

A la figure 3c, on peut voir le moule dans une deuxième position de fermeture, le plan de joint P étant ouvert. Comme illustré, le moule passe de la première position de fermeture à la deuxième position de fermeture en déplaçant par exemple l'empreinte (112) suivant une direction indiquée par la flèche (150), l'empreinte (111) ou encore en déplaçant les deux empreintes du moule (110). Dans cette deuxième position de fermeture, une deuxième cavité d'injection (160) est formée entre les empreintes du moule. Avantageusement, l'empreinte (112) peut comprendre une pièce mobile (220) configurée pour se déplacer de manière relative par rapport à l'empreinte (112) et ainsi mieux contrôler la taille de la deuxième cavité d'injection (160).

Comme illustré à la figure 3d, le moule est relié à une buse d'injection (180) configurée pour injecter une mousse polymère dans la deuxième cavité d'injection (160). La mousse polymère peut être, par exemple et de manière non limitative, une mousse polyuréthane.

Cette mousse polyuréthane est de préférence issue d'un mélange de plusieurs composants liquides. Ces composants sont par exemple mélangés sous des conditions de température et de pression choisies afin de former un liquide injectable grâce à une machine de mélange à haute pression, connue en soi, dont est issue la buse d'injection (180).

De préférence, un gaz, tel que de l'azote, est ajouté au mélange pour enclencher une réaction d'expansion de la mousse. Ainsi, on injecte de préférence une mousse liquide additionnée d'un tel gaz directement dans la deuxième cavité d'injection (60). Ceci permet également d'optimiser la taille des porosités de la mousse. On notera que la réaction d'expansion est due tant au mélange des produits qu'aux conditions d'injection du mélange et du gaz.

Par ce biais, on moule un deuxième élément de paroi (i.e. ladite deuxième couche injectée) (70) sur le premier élément de paroi (140).

Cette étape d'injection de la mousse réalisée avec un plan de joint P du moule ouvert permet un contrôle facile de l'expansion de la mousse injectée du fait de la dépressurisation créée au sein du moule par l'ouverture du plan de joint P. Cette ouverture permet également d'obtenir un chemin d'injection plus simple pour la buse d'injection (180).

Après injection de la mousse, celle-ci catalyse et optimise son expansion grâce à l'addition de gaz et provoque une réaction exothermique. L'espace libre de la cavité de l'outillage sera ainsi progressivement complètement rempli par la mousse. On pourra contrôler cette expansion par le système de régulation de l'outillage d'injection. A cet effet, le temps de cycle d'injection sera adapté pour obtenir une mousse flexible.

Après l'expansion, on ouvre le moule à grand vitesse afin de créer une décompression permettant la perforation des parois fines de la mousse fermée. Ainsi, en fin de cycle de fabrication on obtient une demi-coquille de réservoir ayant, dans ses zones de ballotement, un revêtement en mousse à cellules ouvertes, dont la présence permet de limiter le bruit solidien ou à effet de choc (slosh noise) dans le réservoir. Ainsi, avantageusement, le deuxième élément de paroi (170) peut former tout ou partie d'un dispositif anti-ballottement interne au réservoir.

Dans un mode de réalisation avantageux, le premier élément de paroi (formé par la première couche injectée) peut comprendre une ou plusieurs cavité(s) d'accrochage dans laquelle ou lesquelles la mousse polymère peut pénétrer lors de son injection dans la deuxième cavité d'injection. De cette façon, on obtient une fixation mécanique solide entre les premier et deuxième éléments de paroi. Les cavités d'accrochage forment par exemple un réseau de nervures sur la portion du premier élément de paroi (140) se trouvant en vis-à-vis du deuxième élément de paroi (70), ou une contre-dépouille.

Dans une alternative, le moule peut comprendre plusieurs points d'injection de mousse ainsi que plusieurs épaisseurs suivant le besoin.

L'invention n'est pas limitée au premier mode de réalisation présenté et d'autres modes de réalisation apparaîtront clairement à l'homme du métier. Notamment dans un autre mode de réalisation particulier du procédé d'injection décrit en référence aux figures 2 et 3 ci-dessus, la buse d'injection est adaptée pour injecter tout type de mousse polymère. Dans un mode de réalisation particulier, la buse d'injection est apte à injecter au moins deux types de mousses polymères distinctes à différent instant du procédé.

## Revendications

1. Procédé pour la fabrication d'au moins une paroi d'un réservoir comprenant au moins une première couche de matière thermoplastique et une deuxième couche à base de mousse, ladite deuxième couche à base de mousse formant au moins une partie d'un dispositif anti-ballottement, la première couche et la deuxième couche étant moulées dans un seul et même moule, le procédé comprenant les étapes suivantes :
- on insère une préforme en matière thermoplastique comprenant au moins la première couche et la deuxième couche dans ledit seul et même moule ouvert;
- on ferme ledit seul et même moule; et
- une fois que ledit seul et même moule est fermé, on souffle la préforme à l'aide d'un fluide sous pression pour la plaquer contre ledit seul et même moule ;
**caractérisé en ce que** ladite deuxième couche est une couche formée d'un mélange d'un polymère thermoplastique et d'un agent moussant chimique, et, une fois que ledit seul et même moule est fermé, on injecte dans le moule fermé un gaz ou un liquide contenant un agent réactif, par exemple à base d'azote ou de dioxyde de carbone, afin de déclencher une réaction de moussage de l'agent moussant de la deuxième couche.

2. Procédé selon la revendication 1, **caractérisé en ce que**, pour obtenir la préforme en matière thermoplastique comprenant au moins la première couche et la deuxième couche, on extrude simultanément la première couche et la deuxième couche.

3. Procédé selon l'une quelconque des revendication 1 à 2, **caractérisé en ce que** la préforme comprend en outre une couche intermédiaire comprenant au moins un adhésif.

4. Procédé selon l'une quelconque des revendications 1 à 3, **caractérisé en ce que** la préforme comprend en outre une couche barrière vis-à-vis des hydrocarbures et/ou une couche comprenant de la matière plastique recyclée, située(s) entre ladite première couche et ladite deuxième couche.

5. Procédé selon l'une quelconque des revendications 1 à 4, **caractérisé en ce que** l'agent moussant chimique est de l'azodicarbonamide.

## Patentansprüche

1. Verfahren zur Herstellung mindestens einer Wand eines Tanks, umfassend mindestens eine erste Schicht aus thermoplastischem Material und eine zweite Schicht auf Schaumbasis, wobei die zweite Schicht auf Schaumbasis mindestens einen Teil einer Schwappschutzvorrichtung bildet, wobei die erste Schicht und die zweite Schicht in einer einzigen Form geformt werden, wobei das Verfahren die Schritte umfasst:
- Einbringen eines Vorformlings aus thermoplastischem Material, der mindestens die erste Schicht und die zweite Schicht umfasst, in die eine geöffnete Einzelform;
- die geöffnete Einzelform ist geschlossen; und
- Sobald die einzelne Form geschlossen ist, wird der Vorformling mit geblasen
unter Druck stehende Flüssigkeit, um sie gegen die Einzelform zu drücken;
**dadurch gekennzeichnet, dass** die zweite Schicht eine aus einer Mischung gebildete Schicht ist ein thermoplastisches Polymer und ein chemisches Schaummittel und
Wenn die Einzelform geschlossen ist, wird ein Gas oder eine Flüssigkeit, die ein reaktives Mittel enthält, beispielsweise auf der Basis von Stickstoff oder Kohlendioxid, in die geschlossene Einzelform injiziert, um eine Schaumreaktion zu starten"

2. Verfahren nach Anspruch 1, **dadurch gekennzeichnet, dass** der Vorformling aus thermoplastischem Material, umfassend mindestens die erste Schicht und die zweite Schicht, die erste Schicht und die zweite sind gleichzeitig extrudierte Schicht."

3. Verfahren nach einem der Ansprüche 1 bis 2, **dadurch gekennzeichnet dass** der Vorformling eine Zwischenschicht umfasst, die mindestens einen Klebstoff umfasst.

4. Verfahren nach einem der Ansprüche 1 bis 3, **dadurch gekennzeichnet, dass** der Vorformling eine Barriereschicht gegen Kohlenwasserstoffe und / oder eine Schicht aus recyceltem Kunststoffmaterial umfasst, die sich zwischen der ersten Schicht und der zweiten Schicht befindet.

5. Verfahren nach einem der Ansprüche 1 bis 4, **dadurch gekennzeichnet dass** das chemische Schaummittel Azodicarbonamid ist.

## Claims

1. Method for manufacturing at least one wall of a tank comprising at least a first layer of thermoplastic material and a foam base second layer, said foam base second layer forming at least one part of an anti-sloshing device, the first layer and the second layer being molded in a single mold, the method comprising the steps of:
- Inserting a preform of thermoplastic material comprising at least the first layer and the second layer in said one opened single mold;
- said one opened single mold is closed; and
- once said single mold is closed, the preform is blown using
pressurized fluid to press it against said single mold;
**characterized in that** said second layer is a layer formed of a mixture
a thermoplastic polymer and a chemical foaming agent, and, once
said single mold is closed, a gas or a liquid containing a reactive agent, for example based on nitrogen or carbon dioxide is injected into the closed single mold, in order to start a foaming reaction

2. Method according to claim 1, **characterized in that**, to obtain the preform in thermoplastic material comprising at least the first layer and the second layer, the first layer and the second are simultaneously extruded layer.

3. Method according to any one of claims 1 to 2, **characterized in that** the preform further comprises an intermediate layer comprising at least one adhesive.

4. Method according to any one of Claims 1 to 3, **characterized in that** the preform further comprises a barrier layer against hydrocarbons and / or a layer comprising recycled plastic material, located between said first layer and said second layer.

5. Method according to any one of Claims 1 to 4, **characterized in that** the chemical foaming agent is azodicarbonamide."
